(19) Europäisches Patentamt
European Patent Office
Office européen des brevets

(11) Publication number: 0 161 791 B1

(12) **EUROPEAN PATENT SPECIFICATION**

(45) Date of publication of patent specification: **02.11.88**

(51) Int. Cl.$^4$: **B 60 C 1/00,** C 08 K 5/34, C 08 K 5/32, C 08 L 9/00

(21) Application number: **85302487.5**

(22) Date of filing: **09.04.85**

# (54) Low fuel consumption tire with all weather performances.

(30) Priority: **10.04.84 JP 69911/84**

(43) Date of publication of application: **21.11.85 Bulletin 85/47**

(45) Publication of the grant of the patent: **02.11.88 Bulletin 88/44**

(84) Designated Contracting States: **DE FR GB**

(56) References cited:
**FR-A-2 177 936**
**GB-A-1 185 896**
**US-A-3 937 681**
**US-A-4 387 756**
**US-A-4 387 757**

**K.F. HEINISCH: "Kautschuk-Lexikon", 2nd edition, 1977, pages 430-433, A.W. Gentner Verlag, Stuttgart, DE;**

**The file contains technical information submitted after the application was filed and not included in this specification**

(73) Proprietor: **Bridgestone Corporation**
**10-1, Kyobashi 1-Chome Chuo-Ku**
**Tokyo 104 (JP)**

(72) Inventor: **Takuguchi, Eiji**
**2-9, Tamako-Cho 1-Chome**
**Higashi-Murayama City Tokyo (JP)**
Inventor: **Yuto, Kazuaki**
**105, Kumegawa Mansion 29-1 Kumegawa-Cho 5-Chome**
**Higashi-Murayama City Tokyo (JP)**
Inventor: **Oniki, Toru**
**1-13-503, Shimosato 4-chome**
**Higashi-Kurume City Tokyo (JP)**

(74) Representative: **Whalley, Kevin et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 161 791 B1

**Description**

The present invention relates to a pneumatic tire, and more particularly, the invention relates to a low fuel consumption tire with all weather running performances in which particularly, wet skid resistance, rolling resistance, wear resistance and running performance on ice and snow road are remarkably improved.

Since a styrene-butadiene copolymer rubber (SBR) is excellent in wet skid resistance on wet road and wear resistance, this rubber has been heretofore used widely for the tread of the tires. However, such a rubber tread is difficult to be applied to a low fuel consumption tires because energy loss is large, heat is likely to be generated, and energy loss in rolling is large. Further, since the rubber hardening is conspicuous at a low temperature, the skid performance on the ice and snow road is deteriorated and the application of this rubber to the tire for use in the snow and ice road is not desirable.

As the method of simultaneously improving the wet skid resistance, the heat generation, and the rolling resistance, Japanese Patent Application Laid-Open No. 51,503/1982, Japanese Patent Application Laid-Open No. 55,204/1982, and Japanese Patent Application Laid-Open No. 36,705/1982 disclose the use of styrene-butadiene rubber (SBR) in which the contents of bound styrene and vinyl bond are controlled. This SBR exhibits an excellent wet skid resistance and low fuel consumption, but the glass transition temperature (Tg) is high. Consequently, the rubber hardening is rapid and conspicuous at a low temperature and further the deterioration in the brittle fracture performance at a low temperature is observed, thereby resulting in the deteriorated skid performance on the snow and ice road.

On the other hand, although there have been proposed various pneumatic tires suitable for the snow and ice roads, the performances thereof are not necessarily satisfactory, and still desired to be improved. In this connection, examination has been heretofore made on the material of the tread member to enhance the tread-gripping force on the snow and ice roads. The techniques of reducing the hardness of rubber at low temperatures are well known from C. S. Wilkinson; RCT, 27 255 (1954), F. S. Conant; RCT 22 863 (1949); and so on. For instance, as known from the literatures such as W. G. Nörich: The Friction of Polymer on Ice (Journal of the IRI, pp 192, October, 1972), Desmond Moore; The Friction of Pneumatic Tires (1975) and so on, when butadiene rubber (BR), natural rubber (NR), and/or polyisoprene rubber (IR) is used as the tread rubber, the tread-gripping force on the snow and ice road is improved. However, such methods unfavorably lower the tread-gripping force on the wet roads. In order to mitigate the reduction in the tread-gripping force, as known from the literatures such as A. C. Bassi; RCT 381 965, D. Bulgin, G. D. Hubberd, M. H. Walters; Proc. 4th Rubber Tech. Conf. London 193 (1962) and so on, there has been known a method of using a large amount of styrene butadiene copolymer rubber, butyl rubber or carbon black. However, such a method unfavorably lowers the snow and ice performances and increases the rolling resistance.

It is therefore an object of the present invention to provide a low fuel consumption tire which is free from the above-mentioned problems encountered by the prior art tires.

More particularly, the object of the present invention is to provide a low fuel consumption tire with all weather running performances which possesses low fuel consumption performance, wet skid resistance performance, snow/ice road running performances as mainly required by the radial tires, and particularly, the radial tires for the passenger cars.

According to the present invention, there is a provision of a low fuel consumption tire with all weather running performances which uses as a tread a vulcanizable rubber composition in which into 100 parts by weight of a rubber component consisting of 100 to 25 parts by weight of at least one kind of diene rubber containing 0 to 30% of styrene and 100 to 70% of butadiene in which the percentage of vinyl bonds in butadiene is 25 to 95%, and 0 to 75 parts by weight of at least one different kind of diene rubber from the said first diene rubber and selected from natural rubber, polyisoprene rubber, polybutadiene rubber and styrene-butadiene rubber is added 30 to 80 parts by weight of carbon black having iodine adsorption value (IA) of not less than 70 mg/g, and dibutylphthalate (DBP) absorption of not less than 90 ml/100 g, and 0.2 to 10 parts by weight of at least one kind of nitroso compound selected from the group consisting of a nitrosoquinoline compound represented by the following formula:

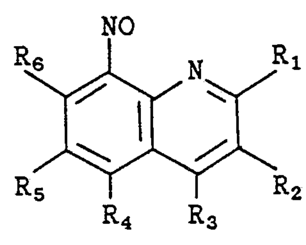

wherein $R_1$, $R_2$, $R_3$, $R_4$, $R_5$ and $R_6$ denote the same or different substituents selected from a hydrogen atom, a hydroxyl group, and an alkyl group; and a nitrosoaniline compound represented by the following formula:

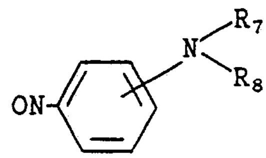

wherein $R_7$ and $R_8$ denote the same or different substituents selected from a hydrogen atom , an alkyl group, and a phenyl group.

These and other objects, features and advantages of the invention will be well appreciated upon reading of the following description of the invention when taken in connection with the attached drawings with understanding that some modifications, variations and changes of the same could be easily made by the skilled in the art to which the invention pertains without departing from the spirit of the invention as claimed appended hereto.

For the better understanding of the invention, reference is made to the attached drawings, wherein:

Fig. 1 is a graph showing the relationship between 0°C tan δ and 60°C tan δ in rubber compositions in Examples; and

Fig. 2 is a graph showing the relationship between 0°C tan δ and −20°C E′ in the rubber compositions in Examples.

During the course of having made various studies so as to accomplish the above object, the present inventors have noted that there is disclosed in Japanese Patent Publication No. 38,131/1975, British Patent No. 1,185,896 and so on that the rubber compositions into which a nitrosoquinoline compound, or nitrosoaniline compound is added as a reactive antioxidant and that such nitroso compounds improve the resilience and also have a chipping prevention effect, and have made investigations to mainly improve the heat generation. Consequently, the present inventors have found that not only the heat generation property and the low fuel consumption performance of the rubber composition but also the low temperature brittleness performance can be improved by combining a diene rubber, carbon black and nitroso compound which meet specified requirements, and that the low fuel consumption tire with all weather running performance which satisfies the wet skid resistance, low rolling resistance, snow/ice road running performance, wear resistance and so forth can be obtained by using this rubber composition as a tread member. As a result, the inventors have accomplished the invention.

The pneumatic tire according to the present invention is characterized in that a tread is constituted by a vulcanizable rubber composition in which specified carbon black and a nitroso compound are added into a raw rubber satisfying specified requirements. As a raw rubber, use may be made of at least one kind of a diene rubber (hereinafter referred to as "diene rubber-A") alone containing 0 to 30% of styrene and 25 to 95% of vinyl bond in a butadiene unit, or a blend of not less than 25 parts by weight of the diene rubber-A and not more than 75 parts by weight of at least one kind of a different diene rubber (hereinafter referred to as "diene rubber-B") selected from natural rubber (NR), polyisoprene rubber (IR), polybutadiene rubber (BR), styrene-butadiene copolymer rubber (SBR) different from the diene rubber-A. If the content of styrene is 0 or the vinyl bond is less than 25% in the diene rubber-A, the wet skid resistance is unfavorably lowered, while if the content of styrene is more than 30% and the vinyl bond is more than 95%, the rolling resistance and the snow/ice road running performances are unfavorably deteriorated, respectively. When the blend of the diene rubber-A and the different diene rubber-B is used, if the diene rubber-A is less than 25 parts by weight, the wet skid resistance and the rolling resistance are unfavorably deteriorated.

The relation between the content of the bound styrene and the content of the vinyl bond of the diene rubber-A is a factor which largely contributes to the wet skid resistance, the rolling resistance and the snow/ice road running performances. Among them, the content of the styrene more largely contributes thereto. The content of the styrene is represented by weight % relative to the whole diene rubber-A, and therefore can be independently considered. But, as the content of the bound styrene varies, the content of butadiene does. Since the content of the vinyl bond (1,2-bond) is represented by the weight % in the butadiene unit, it is apparently influenced by the content of the bound styrene. For this reason, the conditions under which the wet skid resistance and the rolling resistance are satisfied can be represented by the content of the bound styrene and the content of the vinyl bond as a function of the content of the bound styrene. As a result of the investigation, in the case of the diene rubber-A in which the content of the bound styrene is 0 to 30% by weight, and the content of vinyl bond in that of the butadiene unit is 25 to 95% by weight, it was proved that the conditions can be approximated in the following formula:

$$45 \leqq 1.7 \times \text{styrene content (weight \%)} + \text{vinyl bond content (weight \%)} \leqq 120$$

That is, if the above range is met, the wet skid resistance, the rolling resistance and the snow/ice road running performances can be simultaneously satisfied when the nitroso compound is added as mentioned above. If the value is less than 45, unfavorably the wet skid resistance is lowered, and can no longer be improved even if the blending factors such as combined use of carbon black, oil and the different diene rubber-B are changed.

If the value exceeds 120, unfavorably the rolling resistance can in its turn no longer be improved even when other factors are changed.

The above-recited approximate formula is preferably:

$$65 \leqq 1.7 \times \text{styrene content (weight \%)} + \text{vinyl bond content (weight \%)} \leqq 120$$

When the value of "1.7 × styrene content (weight %) + vinyl bond content (weight %)" is set higher within the above range, the performances can be preferably well balanced by setting the combined use ratio of the nitroso compound higher.

As the diene rubber-A, it is preferable to use 100 to 40 parts by weight of the diene rubber-A containing 0 to 30% of styrene and 25 to 70% of vinyl bond, preferably 5 to 25% of styrene and 35 to 70% of vinyl bond, more preferably 10 to 25% of styrene and 45 to 70% of vinyl bond. When the ratio of the vinyl bond is smaller, the wet skid resistance is insufficient. Even when 100 parts by weight of the diene rubber-A is used, the wet skid resistance is insufficient. As the content of styrene and vinyl bond are increased, the combined use with other diene rubber is possible, but it is preferable to use up to 40 parts by weight of the diene rubber-A.

The nitroso compound to be added to the above raw rubber according to the present invention includes a nitrosoquinoline compound represented by the following formula:

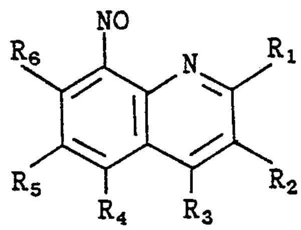

(1)

wherein $R_1$, $R_2$, $R_3$, $R_4$, $R_5$ and $R_6$ denote the same or different substituents selected from a hydrogen atom, a hydroxyl group, and an alkyl group; and a nitrosoaniline compound represented by the following formula:

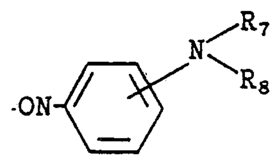

wherein $R_7$ and $R_8$ denote the same or different substituents selected from a hydrogen atom, an alkyl group, and a phenyl group. The above compounds are added to improve the tread-gripping force on the snow and ice road and the rolling resistance, and the addition amount thereof is 0.2 to 10 parts by weight, preferably 0.2 to 5 parts by weight, relative to 100 parts by weight of the raw rubber. If the addition amount is less than 0.2 part by weight, effects of improving the snow and ice road running performances and the rolling resistance are insufficient, while if it exceeds 10 parts by weight, the wear resistance is unfavorably deteriorated.

As the nitrosoquinoline compound represented by the above formula (1), mention may be preferably made of nitrosohydroxyquinoline such as 5-nitrosohydroxyquinoline, 7-nitroso-8-hydroxy-5-methylquinoline, 5-nitroso-8-hydroxy-6-methylquinoline, 8-nitroso-5-hydroxy-6-methylquinoline, 5-nitroso-8-hydroxy-7-methylquinoline, 6-nitroso-5-hydroxy-8-methylquinoline. Among them, 5-nitroso-8-hydroxyquinoline is most preferred.

As the nitrosoaniline compounds represented by the above formula (2), mention may be preferably made of N,N-dimethyl-nitrosoaniline and nitrosodiphenylamine.

It is surprising that not only the rolling resistance but also the snow and ice performances are enhanced by adding the nitroso compound into the rubber composition.

The carbon black to be added to the above raw rubber in the present invention has an iodine adsorption value (IA) of not less than 70 mg/g and a dibutylphthalate (DBP) absorption of not less than 90 ml/100 g. If the IA is less than 70 mg/g or DBP absorption is less than 90 ml/100 g, the wear resistance is unfavorably lowered. Among them, it is preferable to use carbon black with IA of 70 mg/g to 130 mg/g and DBP absorption of not less than 110 ml/100 g. If IA exceeds 130 ml/100 g, the rolling resistance is deteriorated. On the other hand, particularly when DBP absorption exceeds 100 ml/100 g, remarkable result in enhancing the snow and ice performance at the addition of the nitroso compound can be obtained to show remarkable effects. Particularly, when the IA is 70 to 110 mg/g and the DBP absorption is in a range of 110 mg/g to 150 mg/g, it was confirmed that excellent results are obtained with respect to the rolling resistance, the wear resistance and the snow and ice road running performance.

Carbon black is compounded in a range of 30—80 parts by weight with respect to 100 parts by weight of the raw rubber. If carbon black is less than 30 parts by weight, the wear resistance is lowered, while if the content is over 80 parts by weight, the rolling resistance and the snow/ice road running performances are unfavorably deteriorated.

Further, compounding agent ordinarily used in the rubber composition, such as vulcanizer, accelerator, activator, and antioxidant and so on may be appropriately compounded into the above-mentioned rubber composition.

The object of the present invention can be accomplished by forming the tread with the above-constituted rubber composition. It is important in controlling the snow/ice performances under various circumstances that −20°C E′ is not more than 280 $kg/cm^2$, preferably not more than 250 $kg/cm^2$, 0°C E′ is not more than 190 $kg/cm^2$, and preferably 150 $kg/cm^2$, and it is also important in controlling and maintaining the snow/ice performances over various circumstances that the change in E′ is small in such a temperature range. E′ is a storage modulus.

Favorably, in order to control the wet skid performances, the 0°C loss tangent (tan δ) is not less than 0.30, preferably not less than 0.33, and in order to control the rolling resistance, the 60°C tan δ is not more than 0.22, and preferably not more than 0.19.

As a method of further reducing the rolling resistance without damaging the snow/ice road running performances and the wet skid resistance, the above performances are favorably much more enhanced by introducing the cap tread rubber/base tread rubber (cap/base) structure. It is possible to use as a base tread rubber composition the composition used in the present invention which is varied in compounding ratio from the cap tread rubber.

The present invention will be explained more in detail with reference to the following examples, which are given merely illustrative of the invention as claimed.

## Examples

Twenty two kinds of rubber compositions constituted at the respective compounding recipes (parts by weight) shown in Table 1 were prepared. Before the tire evaluation, E′ at −20°C and 0°C and tan δ at 0°C and 60°C were measured by means of a spectrometer, and the Lambourn abrasion was evaluated in the following manner and are shown in Fig. 1, too. Next, eight kinds of the rubber compositions were selected among the above-mentioned ones, and eight kinds of tires each having a tire size of 165 SR 13 and a tread constituted therefrom were built. Thereafter, with respect to the respective tires, the tread-gripping force on the snow/ice road and the tread-gripping force on the wet road (brakability), the wear resistance, and the rolling resistance were evaluated on an actual car in the following method.

Results obtained are shown in Table 2.

Evaluation methods:

(1) Road-gripping force on snow and ice road

A brake was trod during running at a speed of 20, 30 or 40 km/h, and stopping distance was measured, the brakability was shown by index taking a value of a tire of Comparative Example 1 as 100.

(2) Brakability:

A brake was rapidly trod on a wet asphalt road from a speed of 40 km/h, 70 km/h or 100 km/h, and a running distance at which a vehicle was completely stopped was determined, and a determined value was shown by index taking a value of Comparative Example 1 as 100. The larger the figure, the better the brakability.

(3) Rolling resistance:

While a load of 385 kg was applied onto a tire of an internal pressure of 1.7 $kg/cm^2$ on a steel drum of 1,707.6 mm in diameter and 350 mm in width, and the drum was rotated by driving a motor. After the tire was warmed up at a speed of 80 km/h for 30 minutes, the speed was raised up to 200 km/h. Then, a motor driving clutch was turned off, and the tire was let rolling. The rolling resistance between the tire and the drum at a speed of 50 km/h was calculated on the basis of the drum deceleration speed and the lapse of time. The actual tire rolling resistance was determined by subtracting a preliminarily determined drum resistance from this value. The rolling resistance was shown by index taking a value of Control Example 1 as 100. The larger the figure, the better the rolling resistance.

(4) Wear resistance:

The Lambourn wear resistance of a rubber composition was evaluated in a laboratory in the following manner:

Vulcanization was carried out for a period 1.2 times as long as a period at which the torque of the rubber composition took the maximum value when measured by a rheometer. Then, the Lambourn abrasion was evaluated at a slip rate of 10% and under load of 4.5 kg, and shown by index taking a value of Comparative Example 1 as 100.

(5) Measuring ways of E′ and tan δ.

By using a viscoelastic spectrometer made by Iwamoto Seisakusho, the E′ and tan δ were measured at a frequency of 50 Hz and a dynamic strain of 1% under a static elongation strain of 5%. A sample was shaped in a form of a strip having a length of 20 mm between chucks, a width of 5 mm and a thickness of 2 mm. The vulcanization conditions were the same as those in the above mentioned (4).

Table 1(a)

| | Bound styrene content % | Butadiene unit % | | | Bound styrene % × 1.7 + vinyl % | Comparative Example 1 | Comparative Example 2 | Comparative Example 3 | Comparative Example 4 | Example 1 | Comparative Example 5 | Comparative Example 6 | Comparative Example 7 | Comparative Example 8 | Comparative Example 9 | Example 2 |
|---|---|---|---|---|---|---|---|---|---|---|---|---|---|---|---|---|
| | | cis -1,4 | trans -1,4 | vinyl | | | | | | | | | | | | |
| SBR-1 | 25.0 | 19 | 33 | 48 | 90.5 | | | | 15 | 40 | | | 50 | | | |
| 2 | 25.0 | 25 | 42 | 33 | 75.5 | | | | | | | 100 | | 50 | | |
| 3 | 20 | 13 | 22 | .65 | 99.0 | | | | | | 100 | | | | | 100 |
| 4 | 10.0 | 7 | 14 | 79 | 96.0 | | | | | | | | | | | |
| 5 | 18.0 | 24 | 45 | 31 | 61.6 | | | | | | | | | | 50 | |
| 6 | 25.0 | 6 | 10 | 84 | 126.5 | | | | | | | | | | | |
| 7 | 23.5 | 16 | 66 | 18 | 58.0 | 50 | 100 | 15 | | | | | | | | |
| BR-8 | 0 | 95 | 3 | 2 | 2 | 50 | | | | | | | | | | |
| 9 | 0 | 3 | 6 | 91 | 91 | | | | | | | | | | | |
| NR (RSS#4) | | | | | | | | 85 | 85 | 60 | | | 50 | 50 | 50 | |

Table 1(b)

| * | Iodine adsorption value | DBP absorption | Comparative Example 1 | Comparative Example 2 | Comparative Example 3 | Comparative Example 4 | Example 1 | Comparative Example 5 | Comparative Example 6 | Comparative Example 7 | Comarative Example 8 | Comparative Example 9 | Example 2 |
|---|---|---|---|---|---|---|---|---|---|---|---|---|---|
| N 339 | 89 | 121 | 85 | 65 | | | | 50 | 50 | 50 | 50 | 50 | 50 |
| N 330 | 82 | 103 | | | | | | | | | | | |
| N 220 | 122 | 114 | | | 55 | 55 | 55 | | | | | | |
| Aromatic oil | | | 40 | 15 | 8 | 8 | 8 | 6 | 6 | 6 | 6 | 6 | 6 |
| Naphthenic oil | | | | | | | | | | | | | |
| 5-nitroso-8-hydroxyquinoline | | | | | 2 | 2 | 4 | | | | | | |
| N,N-dimethyl-p-nitrosoaniline | | | | | | | | | | | | | 4 |
| Stearic acid | | | 1 | 1 | 1 | 1 | 1 | 1 | 1 | 1 | 1 | 1 | 1 |
| Zinc oxide | | | 3 | 3 | 3 | 3 | 3 | 3 | 3 | 3 | 3 | 3 | 3 |
| Antioxidant IPPD | | | 1 | 1 | 1 | 1 | 1 | 1 | 1 | 1 | 1 | 1 | 1 |
| Vulcanization accelerator DPG | | | 0.3 | 0.3 | - | - | - | 0.3 | 0.3 | 0.1 | 0.1 | 0.1 | 0.3 |
| Vulcanization accelerator DM | | | 0.3 | 0.4 | 0.3 | 0.3 | 0.3 | 0.4 | 0.4 | 0.3 | 0.3 | 0.3 | 0.4 |
| Vulcanization accelerator Nobs | | | 1.0 | 0.4 | 0.4 | 0.4 | 0.5 | 0.4 | 0.4 | 0.5 | 0.5 | 0.5 | 0.4 |
| Sulfur | | | 1.8 | 1.8 | 1.8 | 1.8 | 1.8 | 1.8 | 1.8 | 1.8 | 1.8 | 1.8 | 1.8 |

**Table 1(c)**

| | Bound styrene content % | Butadiene unit % | | | Bound styrene % × 1.7 + vinyl % | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| | | cis -1,4 | trans -1,4 | vinyl | | | | | | | | | | | | |
| SBR-1 | 25.0 | 19 | 33 | 48 | 90.5 | | | 50 | | | | | | 70 | 70 | 70 |
| 2 | 25.0 | 25 | 42 | 33 | 75.5 | | 100 | | 50 | | | | | | | |
| 3 | 20 | 13 | 22 | 65 | 99.0 | 100 | | | | | | | | | | |
| 4 | 10.0 | 7 | 14 | 79 | 96.0 | | | | | 50 | | | | | | |
| 5 | 18.0 | 24 | 45 | 31 | 61.6 | | | | | | 75 | | | | | |
| 6 | 25.0 | 6 | 10 | 84 | 126.5 | | | | | | | 50 | | | | |
| 7 | 23.5 | 16 | 66 | 18 | 58.0 | | | | | | | | | | | |
| BR-8 | 0 | 95 | 3 | 2 | 2 | | | | | | | | | | | |
| 9 | 0 | 3 | 6 | 91 | 91 | | | | | | | | 50 | | | |
| NR (RSS#4) | | | | | | | | 50 | 50 | 50 | 25 | 50 | 50 | 30 | 30 | 30 |

**Table 1(d)**

| | Iodine adsorption value | DBP absorption | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| N 339 | 89 | 121 | 50 | 50 | 50 | 50 | 50 | 50 | 50 | 50 | 50 | | |
| N 330 | 82 | 103 | | | | | | | | | | 50 | |
| N 220 | 122 | 114 | | | | | | | | | | | 50 |
| Aromatic oil | | | | 6 | 6 | 6 | 6 | 6 | 6 | 6 | 4 | 4 | 4 |
| Naphthenic oil | | | 6 | | | | | | | | 2 | 2 | 2 |
| 5-nitroso-8-hydroxyquinoline | | | | | | | | | 2 | 2 | 4 | 4 | 4 |
| N,N-dimethyl-p-nitrosoaniline | | | 4 | 4 | | | | | | | | | |
| Stearic acid | | | | | 2 | 2 | 2 | 2 | | | | | |
| Zinc oxide | | | 3 | 3 | 3 | 3 | 3 | 3 | 3 | 3 | 3 | 3 | 3 |
| Antioxidant IPPD | | | 1 | 1 | 1 | 1 | 1 | 1 | 1 | 1 | 1 | 1 | 1 |
| Vulcanization accelerator DPG | | | 0.3 | 0.3 | 0.1 | 0.1 | 0.1 | 0.1 | 0.1 | 0.1 | 0.2 | 0.2 | 0.2 |
| Vulcanization accelerator DM | | | 0.4 | 0.4 | 0.3 | 0.3 | 0.3 | 0.3 | 0.3 | 0.3 | 0.3 | 0.3 | 0.3 |
| Vulcanization accelerator Nobs | | | 0.4 | 0.4 | 0.5 | 0.5 | 0.5 | 0.5 | 0.5 | 0.5 | 0.5 | 0.5 | 0.5 |
| Sulfur | | | 1.8 | 1.8 | 1.8 | 1.8 | 1.8 | 1.8 | 1.8 | 1.8 | 1.8 | 1.8 | 1.8 |

Table 2(a)

| | | Comparative Example 1 | Comparative Example 2 | Comparative Example 3 | Comparative Example 4 | Example 1 | Comparative Example 5 | Comparative Example 6 | Comparative Example 7 | Comparative Example 8 | Comparative Example 9 | Example 2 |
|---|---|---|---|---|---|---|---|---|---|---|---|---|
| Spectrometer | -20°C E' ($kg/cm^2$) | 235 | 338 | 210 | 220 | 230 | 385 | 369 | 270 | 252 | 228 | 253 |
| | 0°C E' ($kg/cm^2$) | 151 | 189 | 145 | 150 | 156 | 223 | 205 | 172 | 162 | 150 | 152 |
| | 0°C tan $\delta$ | 0.36 | 0.38 | 0.28 | 0.32 | 0.35 | 0.48 | 0.41 | 0.37 | 0.33 | 0.28 | 0.45 |
| | 60°C tan $\delta$ | 0.27 | 0.24 | 0.14 | 0.14 | 0.13 | 0.17 | 0.17 | 0.16 | 0.15 | 0.14 | 0.11 |
| | Lambourn abrasion index | 100 | 133 | 139 | 138 | 140 | 133 | 136 | 127 | 129 | 130 | 124 |
| Tire performance (all shown by index) | Rolling resistance | 100 | 103 | | | | 115 | 116 | 117 | | | |
| | Brakability on ice | 100 | 85 | | | | 77 | 80 | 89 | | | |
| | Brakability on snow | 100 | 83 | | | | 79 | 82 | 91 | | | |
| | Brakability on wet road | 100 | 101 | | | | 109 | 103 | 100 | | | |

Table 2(b)

| | | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|
| Spectrometer | -20°C E' ($kg/cm^2$) | 236 | 238 | 217 | 202 | 207 | 201 | 253 | 215 | 215 | 210 | 240 |
| | 0°C E' ($kg/cm^2$) | 140 | 141 | 138 | 120 | 126 | 120 | 148 | 126 | 131 | 130 | 143 |
| | 0°C tan δ | 0.44 | 0.39 | 0.36 | 0.32 | 0.38 | 0.30 | 0.40 | 0.37 | 0.36 | 0.36 | 0.37 |
| | 60°C tan δ | 0.10 | 0.12 | 0.13 | 0.13 | 0.12 | 0.12 | 0.14 | 0.13 | 0.10 | 0.09 | 0.13 |
| | Lambourn abrasion index | 120 | 126 | 121 | 122 | 124 | 129 | 119 | 123 | 122 | 108 | 136 |
| Tire performance (all shown by index) | Rolling resistance | 124 | | 121 | | 122 | | | | | | |
| | Brakability on ice | 100 | | 104 | | 104 | | | | | | |
| | Brakability on snow | 103 | | 102 | | 103 | | | | | | |
| | Brakability on wet road | 105 | | 100 | | 102 | | | | | | |

In Table,

| | |
|---|---|
| SBR-1 to 6 | solution polymerized SBR |
| SBR-1 | S-1215, manufactured by Shell (trade name) |
| SBR-2 to 6 | polymer prepared for trial (SBR-3 and -4 are SBR of a coupling type with Sn and the coupling efficiency is about 50%) |
| SBR-7 | emulsion polymerized SBR, SBR 1500 manufactured by Japan Synthetic Rubber Co., Ltd. (JSR) |
| SBR-8 | JSR BR01 |
| BR-9 | polymer prepared for trial (polymer of a coupling type with Sn at the coupling efficiency of about 50%) |
| IPPD | N-phenyl-N'-isopropyl-p-phenylenediamine |
| DPG | diphenylguanidine |
| DM | dibenzothiazyldisulfide |
| Nobs | N-oxydiethylene-2-benzothiazolylsulpheneamide |

With respect to the microstructure of the polymer, the content of the bound styrene was determined by using a spectrometer with reference to a calibration curve using an absorbence at 669 $cm^{-1}$, and the microstructure of the butadiene unit was determined according to D. Morero's method (Chem. & Ind. *41* 758 (1959).

In Table 1, Comparative Example 1 is an ordinary composition example for the treads of the snow tires, and Comparative Example 2 is an ordinary composition example for the treads of the summer tires.

In Fig. 1 is shown the relation between 0°C tan δ and 60°C tan δ of the rubber composition in Table 1 and the relation between 0°C tan δ and −20°C E' is shown in Fig. 2. Marks "○" and "◇" relate to the rubber composition of Examples and Comparative Examples respectively. The figures inside of the marks "○" and "◇" show the numbers of Examples and Comparative Examples respectively. The larger the figure of 0°C tan δ, the higher the wet skid performance, and the smaller the figure of the 60°C tan δ, the smaller the rolling resistance. The smaller the figure of −20°C E', the more suitable for the snow/ice road running the rubber composition. It is understood from Figs. 1 and 2 that the rubber compositions of Examples 1—13 are excellent in rolling resistance, wet skid performance and as tires for use in the snow/ice road running. The relation shown in the figures shows substantially the same tendency on the tire evaluation, too. And, the performances proportional thereto were appeared.

As mentioned above, since the tires according to the present invention has a tread formed with a rubber composition in which a specific carbon black and nitroso compound, as seen from Table 2, the tread-gripping force on the snow and ice road and the rolling resistance are drastically improved without the tread-gripping force on the wet road and the wear resistance being damaged. Thus, the rubber composition used in the present invention is extremely effective as the low fuel consumption tire for all the weather running purpose.

**Claims**

1. A low fuel consumption tire with all weather running performances which uses as a tread a vulcanizable rubber composition in which into 100 parts by weight of a rubber component consisting of 100 to 25 parts by weight of at least one kind of first diene rubber consisting of 0 to 30% of styrene and 100 to 70% of butadiene in which the percentage of vinyl bonds in butadiene units is 25 to 95%, and 0 to 75 parts by weight of at least one different kind of diene rubber from the said first diene rubber and selected from natural rubber, poyisoprene rubber, polybutadiene rubber and styrene-butadiene copolymer rubber, is added 30 to 80 parts by weight of carbon black having iodine adsorption value (IA) of not less than 70 mg/g and dibuty (DBP) absorption of not less than 90 ml/100 g, and 0.2 to 10 parts by weight of at least one nitroso compound selected from a nitrosoquinoline compound represented by the following formula:

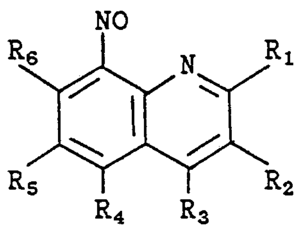

wherein $R_1$, $R_2$, $R_3$, $R_4$, $R_5$ and $R_6$ denote the same or different substituents selected from a hydrogen atom, a hydroxyl group, and an alkyl group; and a nitrosoaniline compound represented by the following formula:

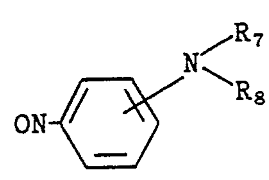

wherein $R_7$ and $R_8$ denote the same or different substituents selected from a hydrogen atom, an alkyl group, and a phenyl group.

2. A tire as claimed in claim 1, characterized in that the rubber component contains 100 to 40 parts by weight of the first diene rubber, in that the content of the styrene is 5 to 25 parts by weight, and in that the percentage of vinyl bonds in the butadiene units is 35 to 70.

3. A tire as claimed in claim 2, characterized in that the content of the styrene is 10 to 25 parts by weight, and in that the percentage of vinyl bonds in the butadiene units is 45 to 70.

4. A tire as claimed in any of claims 1 to 3, characterized in that said IA is 70 to 130 mg/g and said DBP absorption is not less than 110 ml/100 g.

5. A tire as claimed in claim 4, characterized in that said IA is 70 to 110 mg/g and said DBP absorption is 100 to 150 ml/100 g.

6. A tire as claimed in any of claims 1 to 5, characterized in that the nitrosoquinoline compound is a nitrosohydroxyquinoline selected from 5-nitrosohydroxyquinoline, 7-nitroso-8-hydroxy-5-methylquinoline, 5-nitroso-8-hydroxy-6-methylquinoline, 8-nitroso-5-hydroxy-6-methylquinoline, 5-nitroso-8-hydroxy-7-methylquinoline, 6-nitroso-5-hydroxy-8-methylquinoline, and in that the nitrosoaniline compound is N,N-dimethyl-nitroso-aniline or nitrosodiphenylamine.

7. A tire as claimed in any of claims 1 to 6, characterized in that −20°C E′ is not more than 280 kg/cm$^2$, and 0°C E′ is not more than 190 kg/cm$^2$, where E′ is storage modulus.

8. A tire as claimed in claim 7, characterized in that −20°C E′ is not more than 250 kg/cm$^2$, and 0°C E′ is not more than 150 kg/cm$^2$.

9. A tire as claimed in any of claims 1 to 8, characterized in that 0°C tan δ is not less than 0.30, and 60°C tan δ is not more than 0.22, where tan δ is loss tangent.

10. A tire as claimed in claim 9, characterized in that 0°C tan δ is not less than 0.33, and 60°C tan δ is not more than 0.19.

11. A tire as claimed in any of claims 1 to 10, characterized in that $45 \leqq \{1.7 \times$ the styrene content (% by weight) + the vinyl content (% by weight)$\}$ in the first diene rubber $\leqq 120$.

**Patentansprüche**

1. Allwetterreifen mit geringem Treibstoffverbrauch mit einer Lauffläche aus einer Gummimischung, enthaltend 100 Gew.-Teile Gummikomponente aus 100 bis 25 Gew.-Teilen zumindest eines ersten Diengummis, der 0 bis 30% Styroleinheiten und 100 bis 70% Butadieneinheiten aufweist und der Anteil an Vinylbindungen in den Butadieneinheiten 25 bis 95% beträgt, und 0 bis 75 Gew.-Teilen zumindest einer anderen Art Diengummi in Form von Naturgummi, Polyisopren, Polybutadien, Styrol/Butadien-Copolymeren sowie 30 bis 80 Gew.-Teilen Ruß mit einem Jodaufnahmewert von nicht weniger als 70 mg/g und einem Dibutylphthalat-Aufnahmewert von nicht weniger als 90 ml/100 g und 0,2 bis 10 Gew.-Teilen zumindest einer Nitrosoverbindung in Form eines Nitrosochinolins der Formel:

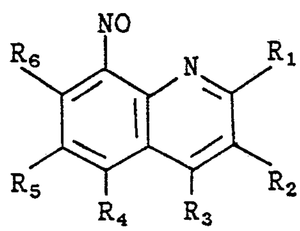

worin die Substituenten $R_1$, $R_2$, $R_3$, $R_4$, $R_5$ und $R_6$ gleich oder unterschiedlich sein können und ein Wasserstoffatom, eine Hydroxyl- oder Alkylgruppe bedeuten, und/oder eines Nitrosoanilins der Formel:

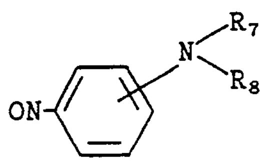

worin die Substituenten $R_7$ und $R_8$ gleich oder unterschiedlich sein können und ein Wasserstoffatom, eine Alkylgruppe oder eine Phenylgruppe sein können.

2. Reifen nach Anspruch 1, bei dem die Gummikomponente 100 bis 40 Gew.-Teile ersten Diengummi mit einem Styrolgehalt von 5 bis 25 Gew.-Teilen und einem Anteil von Vinylbindungen in den Butadieneinheiten von 35 bis 70 enthält.

3. Reifen nach Anspruch 2, bei dem der Anteil des Styrols in der Gummikomponente 10 bis 25 Gew.-Teile und der Vinylbindungen in den Butadieneinheiten 45 bis 70 beträgt.

4. Reifen nach Anspruch 1 bis 3, bei dem der Ruß einen Jodaufnahmewert von 70 bis 130 mg/g und einen Dibutylphthalat-Aufnahmewert von nicht weniger als 110 ml/100 g besitzt.

5. Reifen nach Anspruch 4, bei dem der Ruß einen Jodaufnahmewert von 70 bis 110 mg/g und einen Dibutylphthalat-Auifnahmewert von 100 bis 150 ml/100 g besitzt.

6. Reifen nach einem der Ansprüche 1 bis 5, bei dem das Nitrosochinolin 5-Nitosohydroxychinolin, 7-Nitros-8-hydroxy-5-methylchinolin, 5-Nitroso-8-hydroxy-6-methylchinolin, 8-Nitroso-5-hydroxy-6-methylchinolin, 5-Nitoso-8-hydroxy-7-methylchinolin, 6-Nitroso-5-hydroxy-8-methylchinolin und das Nitrosoanilin N,N-Dimethylnitrosoanilin und/oder Nitrosodiphenylamin ist.

7. Reifen nach einem der Ansprüche 1 bis 6 mit einem Lager-Modul E′ bei −20°C von nicht mehr als 280 kg/cm$^2$ und bei 0°C von nicht mehr als 190 kg/cm$^2$.

8. Reifen nach Anspruch 7 mit einem Lager-Modul E′ bei −20°C von nicht mehr als 250 kg/cm$^2$ und bei 0°C von nicht mehr als 150 kg/cm$^2$.

9. Reifen nach einem der Ansprüche 1 bis 8 mit einem Verlustwinkel tan δ bei 0°C von nicht weniger als 0,30 und bei 60°C von nicht mehr als 0,22.

10. Reifen nach Anspruch 9 mit einem Verlustwinkel tan δ bei 0°C von nicht weniger als 0,33 und bei 60°C von nicht mehr als 0,19.

11. Reifen nach einem der Ansprüche 1 bis 10, bei dem die Beziehung gilt: der 1,7-fache Gehalt an Styroleinheiten und der Gehalt an Vinylgruppen in Gew.-% beträgt im ersten Diengummi ≦ 45 bis 120.

**Revendications**

1. Pneumatique permettant une faible consommation de carburant, présentant des performances de roulement dans toutes les conditions atmosphériques et utilisant, en tant que bande de roulement, une composition de caoutchouc vulcanisable, dans laquelle, dans 100 parties en poids d'un composant de caoutchouc incluant 100 à 25 parties en poids d'au moins une sorte d'un premier caoutchouc diène constitué par 0 à 30% de styrène et 100 à 70% de butadiène, dans lequel le pourcentage des liaisons vinyle dans les unités butadiène est de 25 à 95%, et 0 à 75 parties en poids d'au moins une sorte de caoutchouc diène qui diffère dudit premier caoutchouc diène et est sélectionné parmi le caoutchouc naturel, le caoutchouc polyisoprène, le caoutchouc polybutadiène et le caoutchouc formé d'un copolymère styrène-butadiène, sont ajoutées 30 à 80 parties en poids de noir de carbone possédant une valeur (IA) d'adsorption de l'iode non inférieure à 70 mg/g et une absorption du dibutylphtalate (DBP) non inférieure à 90 ml/100 g, et 0,2 à 10 parties en poids d'au moins un composé nitroso sélectionné parmi un composé nitrosoquinoline représenté par la formule suivante:

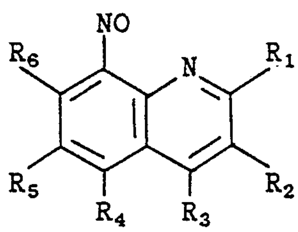

dans laquelle $R_1$, $R_2$, $R_3$, $R_4$, $R_5$ et $R_6$ désignent les mêmes substituants ou des substituants différents choisis parmi un atome d'hydrogène, un groupe hydroxyle et une groupe alkyle; et un composé nitrosoaniline représenté par la formule suivante:

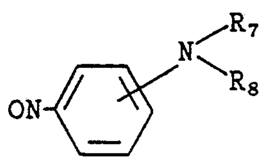

dans laquelle $R_7$ et $R_8$ désignent les mêmes substituants ou des substituants différents sélectionnées parmi un atome d'hydrogène, un groupe alkyle et un groupe phényle.

2. Pneumatique selon la revendication 1, caractérisé en ce que le composant de caoutchouc contient 100 à 40 parties en poids du premier caoutchouc diène, en ce que la teneur en styrène est de 5 à 25 parties en poids et en ce que le pourcentage des liaisons vinyle dans les unités butadiène est de 35 à 70.

3. Pneumatique selon la revendication 2, caractérisé en ce que la teneur en styrène est de 10 à 25 parties en poids et en ce que le pourcentage des liaisons vinyle dans les unités butadiène est de 45 à 70.

4. Pneumatique selon l'une quelconque des revendications 1 à 3, caractérisé en ce que ladite valeur IA est de 70 à 130 mg/g et que ladite absorption DBP n'est pas inférieure à 100 ml/100 g.

5. Pneumatique selon la revendication 4, caractérisé en ce que ladite valeur IA est de 70 à 110 mg/g et que ladite absorption DBP est de 100 à 150 ml/100 g.

6. Pneumatique selon l'une quelconque des revendications 1 à 5, caractérisé en ce que le composé nitrosoquinoline est une nitrosohydroxyquinoline sélectionnée parmi la 5-nitrosohydroxyquinoline, la 7-nitroso-8-hydroxy-5-méthylquinoline, la 5-nitroso-8-hydroxy-6-méthylquinoline, la 8-nitroso-5-hydroxy-6-méthylquinoline, la 5-nitroso-8-hydroxy-7-méthylquinoline, la 6-nitroso-5-hydroxy-8-méthylquinoline, et en ce que le composé nitrosoaniline est la N,N-diméthyl-nitroso-aniline ou la nitroso diphénylamine.

7. Pneumatique selon l'une quelconque des revendications 1 à 6, caractérisé en ce que E' à −20°C n'est pas supérieur à 280 kg/cm$^2$ et que E' à 0°C n'est pas supérieur à 190 kg/cm$^2$, E' désignant le module d'accumulation.

8. Pneumatique selon la revendication 7, caractérisé en ce que E' à −20°C n'est pas supérieur à 250 kg/cm$^2$ et que E' à 0°C n'est pas supérieur à 150 kg/cm$^2$.

9. Pneumatique selon l'une quelconque des revendications 1 à 8, caractérisé en ce que tg δ à 0°C n'est pas inférieure à 0,30 et que tg δ à 60°C n'est pas supérieure à 0,22, tg δ étant la tangente de l'angle de pertes.

10. Pneumatique selon la revendication 9, caractérisé en ce que tg δ à 0°C n'est pas inférieure à 0,33 et que tg δ à 60°C n'est pas supérieure à 0,19.

11. Pneumatique selon l'une quelconque des revendications 1 à 10, caractérisé en ce que l'on a $45 \leqslant$ ($1{,}7 \times$ teneur en styrène (% en poids) + teneur en vinyle (% en poids)) dans le premier caoutchouc diène $\leqslant 120$.

FIG_1

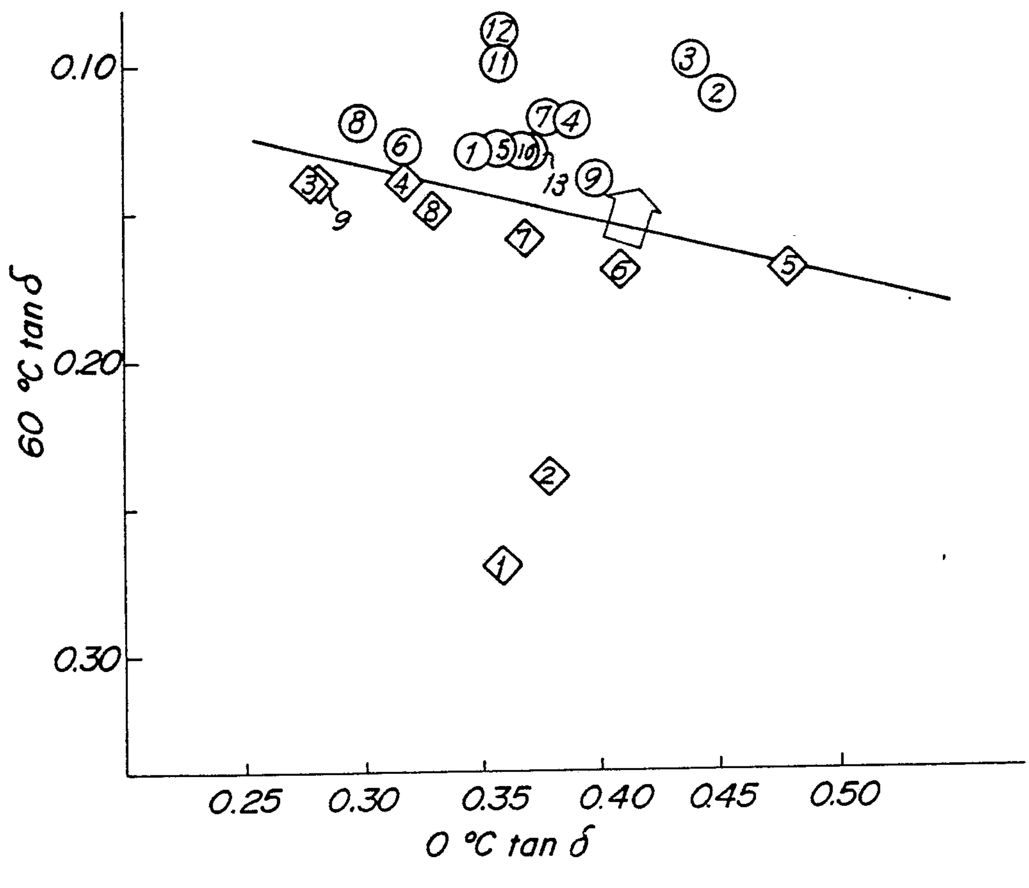

FIG_2

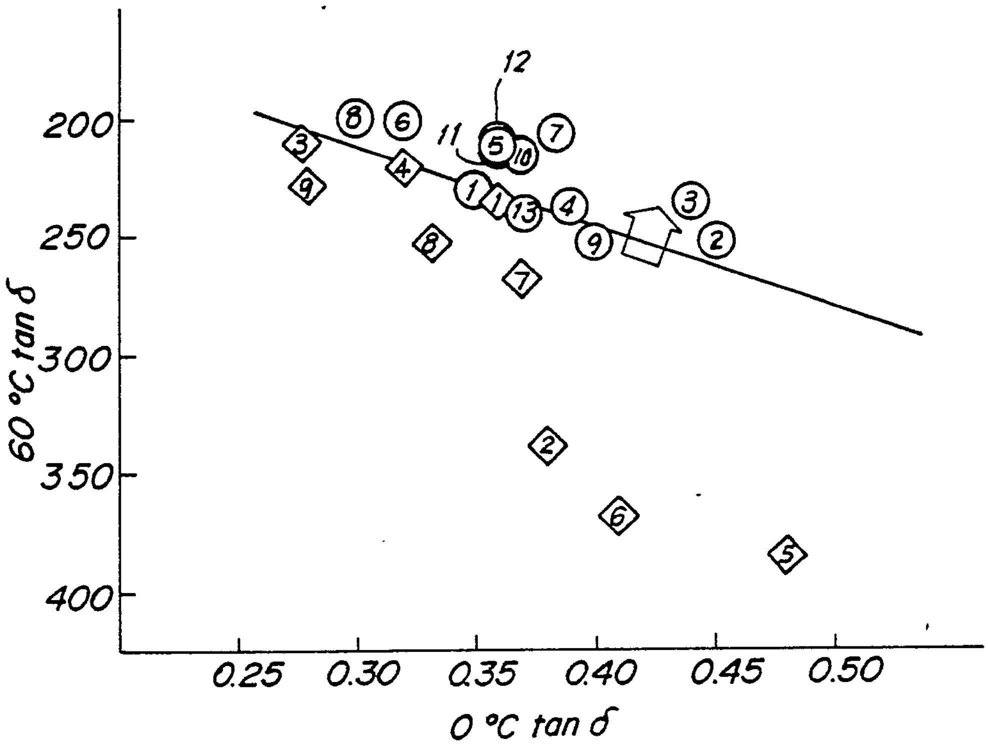

12
11
200
250
300
350
400
60 °C tan δ
0.25
0.30
0.35
0.40
0.45
0.50
0 °C tan δ